# FASCICULE DE BREVET EUROPEEN

(11) **EP 4 110 632 B1**
(45) Date de publication et mention de la délivrance du brevet: **22.11.2023**
(21) Numéro de dépôt: 21708289.0
(22) Date de dépôt: 16.02.2021
(51) Int. Cl.: B60H 1/00, B60K 35/00, B60K 37/06, F24F 11/77

(54) **DISPOSITIF DE COMMANDE SIMPLIFIE D'UN GROUPE DE VENTILATION ET/OU CHAUFFAGE DANS L'HABITACLE D'UN VEHICULE**
VEREINFACHTE STEUERVORRICHTUNG EINER LÜFTUNGS- UND/ODER HEIZEINHEIT IM FAHRGASTRAUM EINES FAHRZEUGES
SIMPLIFIED CONTROL DEVICE OF A VENTILATION AND/OR HEATING UNIT IN THE PASSENGER COMPARTMENT OF A VEHICLE

(30) Priorité: 26.02.2020 FR 2001891
(43) Date de publication de la demande: 04.01.2023
(73) Titulaire: PSA Automobiles SA, 78300 Poissy (FR)
(72) Inventeur: LE FLOCH, Bertrand, 91140 VILLEBON SUR YVETTE (FR); MICHEL, Thierry, 78110 LE VESINET (FR); GAUTHIER, Damien, 78120 RAMBOUILLET (FR)
(86) Numéro de dépôt international: PCT/FR2021/050267
(87) Numéro de publication internationale: WO 2021/170935

(56) Documents cités:
- DE-A1-102009 031 379
- DE-C1- 4 214 178
- US-A1- 2010 019 893

## Description

La présente invention revendique la priorité de 1a demande française 2001891 déposée le 26 février 2020.

### Domaine technique de l'invention

La présente invention concerne un dispositif de commande simplifié d'un groupe de ventilation et/ou chauffage dans l'habitacle d'un véhicule.

### Etat de la technique

Dans l'état de la technique, le brevet FR2742699 décrit un dispositif de commande pour une installation de chauffage ventilation et/ou climatisation d'un véhicule. A cet effet, ledit dispositif de commande comprend des moyens de commande connectés à un boîtier principal de saisie logé dans la planche de bord d'un véhicule et agencé pour saisir de premiers et seconds réglages d'une installation de chauffage, ventilation et/ou climatisation, afin de fixer respectivement les paramètres aérothermiques des parties avant et arrière de l'habitacle. Il est prévu dans la partie arrière de l'habitacle un boîtier auxiliaire de saisie agencé pour saisir des préréglages de l'installation et concernant cette partie arrière, et comportant un moyen d'émission propre à délivrer au boîtier principal de saisie, par voie d'ondes, des signaux électromagnétiques représentatifs des préréglages saisis. Le boîtier principal de saisie comprend des moyens de détection agencés pour recevoir les signaux électromagnétiques véhiculés par lesdites ondes et les transformer en seconds réglages.

Les documents DE4214178 et US20100019893 décrivent des façades de commande d'un système de climatisation de véhicule comprenant un dispositif de ventilation, les façades comportant au moins deux boutons dont deux boutons contigus commandent le dispositif de ventilation. Le document DE102009031379 décrit une telle façade, mais dont deux boutons contigus commandent l'un le dispositif de ventilation et l'autre un dispositif de chauffage.

On comprend que le dispositif du brevet FR2742699, intégré dans l'habitacle d'un véhicule est très sophistiqué et sa mise en oeuvre ne doit pas être évidente par un utilisateur découvrant le dispositif de commande. De plus, cette installation du fait des nombreux composants la constituant doit être extrêmement onéreuse.

### Exposé de l'invention

Le but de l'invention est donc de proposer un dispositif de commande simplifié d'un groupe de ventilation et/ou chauffage dans l'habitacle d'un véhicule afin de réduire au maximum les coûts de fabrication et de proposer à l'utilisateur une manipulation simple des commandes de ventilation chauffage.

A cet effet, la présente invention a pour objet un dispositif de commande simplifié d'un groupe de ventilation et/ou chauffage dans l'habitacle d'un véhicule tel que couvert par la revendication indépendante 1. Des modes de réalisation préférés de la présente invention sont décrits dans les revendications dépendantes annexées.

### Brève description des figures

D'autres avantages de l'invention apparaîtront clairement à la lecture de la description ci-après, donnée à titre indicatif en référence aux dessins annexés dans lesquels:
[Fig.1] La figure 1 est une vue schématique d'une portion de planche de bord comprenant une platine comportant un dispositif de commande simplifié d'un groupe de ventilation et/ou chauffage dans l'habitacle d'un véhicule, suivant l'invention ;
[Fig.2] La figure 2 est une vue d'un logigramme expliquant les différents moyens de piloter ledit groupe de ventilation et/ou chauffage.

### Description détaillée de l'invention

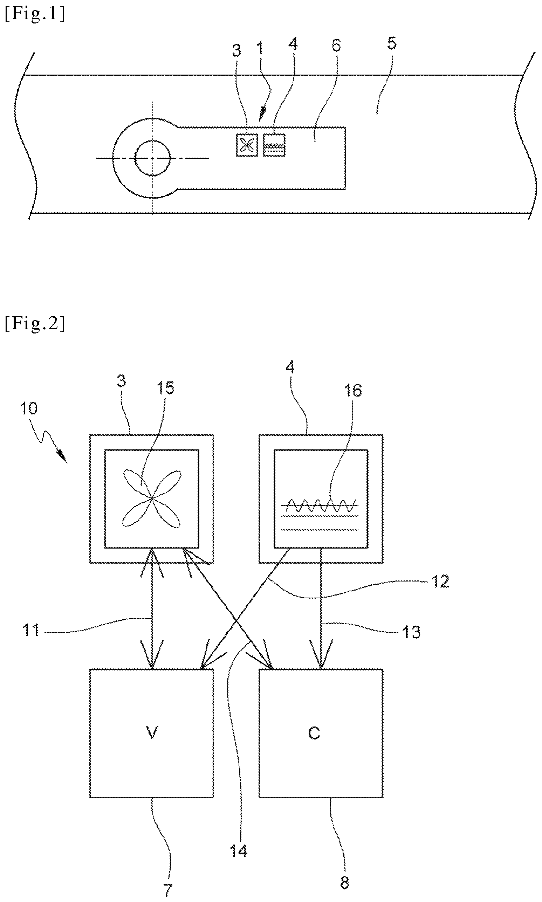

La figure 1 est une vue schématique d'une portion de planche de bord 5 comprenant une platine 6 comportant un dispositif de commande 1 simplifié d'un groupe de ventilation 7 et/ou chauffage 8 dans l'habitacle d'un véhicule, suivant l'invention. La platine 6 est intégrée dans la planche de bord 5. Au centre de la platine 6 émerge deux boutons 3, 4 contigus, c'est-à-dire placé côte à côte. Ces boutons 3, 4 peuvent être de forme carrée ou bien de forme cylindrique. De préférence, le bouton 3 actionnant uniquement le ventilateur 7 est bleu tandis que le bouton 4 actionnant le chauffage est rouge. Un logo affichant un ventilateur est symbolisé sur les faces des boutons 3, 4. Par convention, il est connu que le bleu définisse le froid, tandis que le rouge définisse le chaud.

Le mode de fonctionnement, à titre d'exemple non limitatif est le suivant, un appui simple sur le bouton bleu 3 déclenche le ventilateur 7 et uniquement le ventilateur 7, un nouvel appui sur le bouton bleu arrête le fonctionnement du ventilateur 7. Un appui simple sur le bouton rouge 4 déclenche simultanément le ventilateur 7 et le chauffage 8. Un nouvel appui sur un bouton bleu 3 ou rouge 4 arrête le groupe ventilateur 7 et chauffage 8. De plus, le bouton bleu 3 pourrait actionner plusieurs modes comme par exemple un appui simple ventilation faible, un second appui ventilation moyenne, troisième appui ventilation forte, et un quatrième appui arrêt du ventilateur 7, un appui sur le bouton chauffage met la ventilation sur une ventilation moyenne et le chauffage. Un autre appui aussi bien sur le bouton 3 du ventilateur, que sur le bouton 4 du ventilateur 7 chauffage 8 arrête tout, ventilateur 7 et chauffage 8.

La figure 2 est une vue d'un logigramme 10 expliquant les différents modes de pilotage du groupe du ventilateur 7 et/ou du chauffage 8. Cette vue est symbolisée par les boutons 3,4 de ventilation et la ventilation/chauffage et par les deux blocs V, C représentant le ventilateur 7 et le chauffage 8. Comme représenté le dispositif de commande 1 comprend les deux boutons 3, 4 contigus sur lesquelles sont symbolisés un logo de ventilateur 15 sur le bouton 3 et un logo de chauffage 16 sur le bouton 4, ces logos 15, 16 peuvent être éclairés lorsqu'ils sont actionnés. Un appui sur le bouton 3 suivant la flèche 11 actionne le ventilateur 7 et un appui sur le bouton 4 actionne le ventilateur 7 et le chauffage 8 suivant les flèches 12, 13. Un nouvel appui sur le bouton 3 arrête le ventilateur 7 suivant la flèche 11 et ou le chauffage 8 suivant la flèche 14, si celui-ci est en fonctionnement. Un appui sur le bouton 4 dédié arrête instantanément le ventilateur 7 et le chauffage 8 suivant les flèches 12, 13.

## Revendications

1. Dispositif de commande simplifié (1) d'un groupe de ventilation (7) et/ou chauffage (8) dans l'habitacle d'un véhicule, le dispositif de commande simplifié (1) du groupe de ventilation (7) et/ou chauffage (8) comporte uniquement deux boutons (3, 4) contigus, l'appui sur un premier bouton (3) des boutons (3, 4) contigus actionne uniquement le ventilateur (7), **caractérisé en ce que** l'appui sur le second bouton (4) des boutons contigus (3,4) actionne simultanément le ventilateur (7) et le chauffage (8) .

2. Dispositif de commande (1) selon la revendication précédente, **caractérisé en ce qu'**un appui sur le premier bouton (3) des boutons contigus (3, 4) arrête le fonctionnement du ventilateur (7) .

3. Dispositif de commande (1) selon l'une quelconque des revendications précédentes, **caractérisé en ce qu'**un appui sur le second bouton (4) des boutons contigus (3, 4) arrête le ventilateur (7) et le chauffage (8).

4. Dispositif de commande (1) selon l'une quelconque des revendications précédentes, **caractérisé en ce qu'**un appui sur le premier bouton (3) des boutons contigus (3, 4) arrête simultanément le ventilateur (7) et le chauffage (8) lorsqu'il fonctionne.

5. Dispositif de commande selon l'une quelconque des revendications précédentes, **caractérisé en ce que** les boutons contigus (3, 4) ont une forme carrée ou une forme cylindrique.

6. Dispositif de commande (1) selon l'une quelconque des revendications précédentes, **caractérisé en ce que** l'un (3) des boutons contigus (3, 4) est de couleur bleu pour actionner le ventilateur (7) et l'autre (4) est de couleur rouge pour actionner le chauffage (8).

7. Planche de bord (5) du véhicule comprenant un dispositif de commande (1) selon l'une quelconque des revendications précédentes, et une platine (6), ladite planche de bord (5) est **caractérisée en ce que** les boutons contigus (3, 4) sont montés sur la platine (6) elle-même fixée sur la planche de bord (5) du véhicule.

8. Véhicule comprenant un dispositif de commande (1) selon l'une quelconque des revendications 1 à 6, les boutons contigus (3, 4) sont montés sur une platine (6).

## Patentansprüche

1. Vereinfachte Steuervorrichtung (1) für ein Lüftungsaggregat (7) und/oder eine Heizung (8) im Innenraum eines Fahrzeugs, wobei die vereinfachte Steuervorrichtung (1) für das Lüftungsaggregat (7) und/oder die Heizung (8) nur zwei aneinander grenzende Knöpfe (3, 4) aufweist, wobei die Abstützung auf einen ersten Knopf (3) der aneinander grenzenden Knöpfe (3, 4) nur den Lüfter (7) betätigt, **dadurch gekennzeichnet, dass** die Abstützung auf den zweiten Knopf (4) der aneinander grenzenden Knöpfe (3, 4) gleichzeitig den Lüfter (7) und die Heizung (8) betätigt.

2. Steuervorrichtung (1) nach dem vorhergehenden Anspruch, **dadurch gekennzeichnet, dass** ein Drücken auf den ersten Knopf (3) der benachbarten Knöpfe (3, 4) den Betrieb des Ventilators (7) stoppt.

3. Steuervorrichtung (1) nach einem der vorhergehenden Ansprüche, **dadurch gekennzeichnet, dass** eine Abstützung auf den zweiten Knopf (4) der benachbarten Knöpfe (3, 4) den Ventilator (7) und die Heizung (8) stoppt.

4. Steuervorrichtung (1) nach einem der vorhergehenden Ansprüche, **dadurch gekennzeichnet, dass** eine Abstützung auf den ersten Knopf (3) der benachbarten Knöpfe (3, 4) gleichzeitig den Lüfter (7) und die Heizung (8) stoppt, wenn er läuft.

5. Bedienvorrichtung nach einem der vorhergehenden Ansprüche, **dadurch gekennzeichnet, dass** die aneinander grenzenden Knöpfe (3, 4) quadratisch oder zylindrisch ausgebildet sind.

6. Steuervorrichtung (1) nach einem der vorhergehenden Ansprüche, **dadurch gekennzeichnet, dass** einer (3) der aneinander grenzenden Tasten (3, 4) zur Betätigung des Ventilators (7) blau und der andere zur Betätigung der Heizung (8) rot ist.

7. Armaturenbrett (5) für ein Fahrzeug mit einer Steuervorrichtung (1) nach einem der vorhergehenden Ansprüche und einer Platine (6), wobei das Armaturenbrett (5) **dadurch gekennzeichnet ist, dass** die benachbarten Knöpfe (3, 4) auf der Platine (6) angebracht sind, die ihrerseits an dem Armaturenbrett (5) des Fahrzeugs befestigt ist.

8. Fahrzeug mit einer Steuervorrichtung (1) nach einem der Ansprüche 1 bis 6, wobei die aneinander grenzenden Knöpfe (3, 4) auf einer Platine (6) angebracht sind.

## Claims

1. Simplified control device (1) of a ventilation (7) and/or heating unit (8) in the passenger compartment of a vehicle, the simplified control device (1) of the ventilation (7) and/or heating (8) unit comprises only two contiguous buttons (3, 4), the pressing of a first button (3) of the contiguous buttons (3, 4) actuates only the fan (7), **characterized in that** the pressing of the second button (4) of the contiguous buttons (3, 4) simultaneously actuates the fan (7) and the heating (8).

2. Control device (1) according to the preceding claim, **characterized in that** pressing on the first button (3) of the adjacent buttons (3, 4) stops the operation of the fan (7).

3. Control device (1) according to any one of the preceding claims, **characterized in that** pressing the second button (4) of the adjacent buttons (3, 4) stops the fan (7) and the heater (8).

4. Control device (1) according to any one of the preceding claims, **characterized in that** pressing the first button (3) of the adjacent buttons (3, 4) simultaneously stops the fan (7) and the heater (8) when it is operating.

5. Control device according to any one of the preceding claims, **characterized in that** the contiguous buttons (3, 4) have a square shape or a cylindrical shape.

6. Control device (1) according to anyone of the preceding claims, **characterized in that** one (3) of the contiguous buttons (3, 4) is blue for actuating the fan (7) and the other is red for actuating the heater (8).

7. Dashboard (5) of the vehicle comprising a control device (1) according to anyone of the preceding claims, and a plate (6), said dashboard (5) is **characterized in that** the contiguous buttons (3, 4) are mounted on the plate (6) itself fixed to the dashboard (5) of the vehicle.

8. Vehicle comprising a control device (1) according to any one of claims 1 to 6, the contiguous buttons (3, 4) are mounted on a plate (6).
